# EUROPEAN PATENT APPLICATION

(11) **EP 2 662 337 A1**
(43) Date of publication of application: **13.11.2013**
(21) Application number: 13156041.9
(22) Date of filing: 25.11.2010
(51) Int. Cl.: C01G 55/00, H01G 4/12, H01G 4/008, H01G 11/42, B82Y 30/00

(54) **Core-shell nanoparticles in electronic capacitor applications**

(30) Priority: 30.11.2009 US 264985 P; 10.09.2010 US 381598 P
(62) Divisional of application: 10787261.6
(71) Applicant: OC Oerlikon Balzers AG, 9496 Balzers (LI); Martienssen, Rosalinda, 63303 Dreieich (DE)
(72) Inventor: Reynolds, Glyn Jeremy, Largo, FL Florida 33777 (US)
(74) Representative: Michalski Hüttermann & Partner Patentanwälte

(57) **Abstract**

Provided is an electrostatic capacitor-like electronic battery comprising a high dielectric-strength matrix separating a first electrode from a second electrode and, dispersed in said high-dielectric strength matrix, a plurality of core-shell nanoparticles, each of said core- shell nanoparticles having a conductive core and an insulating shell.

## Description

### FIELD OF THE INVENTION

The present invention relates to solid-state energy-storage devices, and, more particularly, to electrode and dielectric films in such devices.

### Background of the Invention

Dwindling supplies of fossil fuels and the concerns about global warming and rising levels of CO₂ in our atmosphere and our oceans have generated increased research activity in the field of energy conversion and storage. Recently, a lot of attention has been focused on improving current battery technology, especially as rechargeable lithium-ion batteries find new uses in addition to the mobile electronics applications for which they were developed originally. While lithium-ion batteries offer a good combination of specific energy and power density, some applications require faster recharge times, higher cycle lives and even higher power densities.

Using the Heisenberg Uncertainty Principle, it is possible to calculate the theoretical energy density associated with an electron in a box 3Å x 3Å x 3Å as > 2 kWh/liter. If we could realize such a device, it would revolutionize electrical energy storage technology.

Electrochemical capacitors make use of the very large capacitance that is generated at the interface between an electrolyte and an irreversible electrode. This allows them to store more than ten times as much energy as electrostatic capacitors. However, a single cell of an electrochemical capacitor is unable to withstand more than a few volts - the potential difference where electrolysis of the cell electrolyte occurs. Also, since polarization processes in the electrolyte involve diffusion and are much slower than for the typical polarization processes that occur in solid dielectrics, electrochemical capacitors are not well-suited to the many alternating current applications that utilize electrostatic capacitors. They are used mainly in electrical energy storage applications where faster recharge rates, higher cycle lives and/or higher power densities than rechargeable batteries can provide are required, often in conjunction with the latter. Mobile ions in the electrolytes of electrochemical capacitors do not cross the electrode/electrolyte interface and react chemically with the electrode nor do they involve solid-state diffusion of an ion into a host matrix (so-called intercalation), so cell kinetics are fast. In addition, the fact that the electrodes do not change physically or chemically during charge and/or discharge accounts for their large cycle lives.

Rechargeable batteries involve Faradaic reactions where electronic transfer at the electrodes allows relatively large amounts of energy to be stored chemically, while capacitors - including electrochemical capacitors - store energy by charge separation in an electric field. Currently, it is not possible to store as much energy by the latter mechanism as by the former. Some capacitors - so called "pseudocapacitors" - do utilize Faradaic mechanisms whereby electronic transfer occurs across one or both of the electrode/electrolyte interfaces during charge or discharge of the device, for example, RuO₂ electrodes in aqueous electrolytes, but the chemical reaction is confined to the surface and mobile ions do not diffuse into the bulk of the electrode.

As with most industrial operations, it requires energy to manufacture batteries and capacitors. Moreover, these devices do not, *per se,* create energy but they can result in more efficient use of energy. Therefore, it is important to consider the net energy balance of a particular battery or capacitor in a given application. If the energy storage device ends up saving more energy over its lifetime than was used in its fabrication, it results in valuable energy savings and likely reduction in overall CO₂ emissions. If, however, the reverse is true, the impression that the technology in question is a "green" energy-conserving technology is illusory. Rechargeable battery manufacturing is a relatively energy intensive operation: high energy density lithium-ion batteries in particular require high purity materials, some of which must be prepared at high temperatures. Some early lithium-ion batteries had limited cycle lives of just a few hundred cycles and their net energy balance in many typical portable electronic applications was negative. They did provide better performance for a given size and weight and therefore reduced the overall size and weight of the device - before the severity of global warming and diminishing energy reserves was fully appreciated, this was the primary consideration. For vehicular propulsion and power station applications, it is critical that the net energy balance of the batteries is positive and that their lifetimes are sufficient to justify their use. By their very nature, the electrodes in electrochemical batteries undergo chemical changes during charging and discharging. These can be in the form of phase changes, structural changes and/or volume changes, all of which can severely degrade the integrity of the electrodes over time and reduce the capacity of the battery. Indeed, the charging and discharging processes in the latest generation lithium-ion batteries must be carefully controlled - overcharging or over-discharging can limit the performance and cause premature failure of the battery.

In contrast, capacitors store their energy as electrical charge on the electrodes. No chemical changes are involved and most capacitors have cycle lives of a million cycles or more, to 100% depth-of-discharge. Capacitors can also be charged and discharged orders of magnitude faster than electrochemical batteries making them particularly attractive for capturing rapidly released energy such as in falling elevator and automobile regenerative braking applications. Traditional electrostatic and electrolytic capacitors are used widely in electrical circuit applications, but can store only relatively small amounts of energy per unit weight or volume. The emergence of electrochemical double layer (EDL) capacitors has now provided a viable alternative to traditional electrochemical batteries where power density and cycle life are more important than energy density. In fact, the latest generation EDL Supercapacitors have specific energies of ∼ 25 Wh/kg, approximately the same as lead-acid electrochemical cells.

### Prior Art

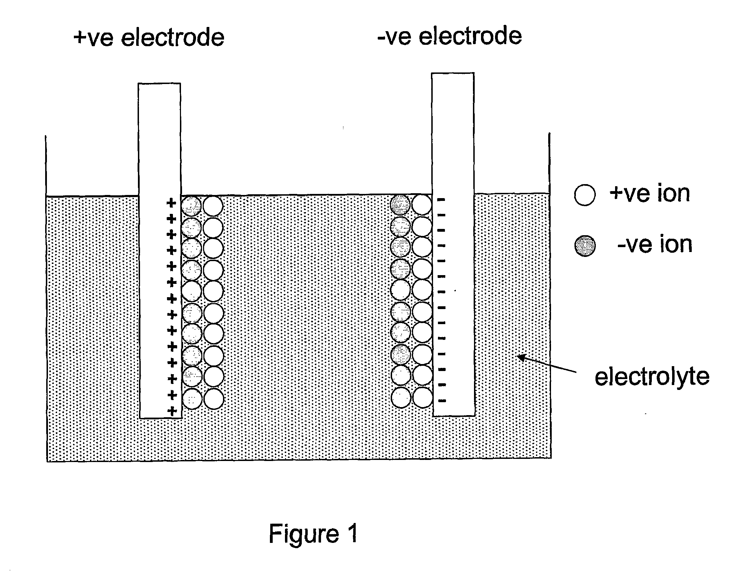

It has long been appreciated that very large capacitances exist at the interface between an electrolyte and an irreversible electrode. See R. Kotz and M. Carlen, "Principles and Applications of Electrochemical Capacitors," Electrochimica Acta 45, 2483-2498 (2000). This phenomenon is exploited in today's commercially available electrochemical double layer (EDL) supercapacitors (sometimes referred to as "ultracapacitors"). See "Basic Research Needs for Electrical Energy Storage", Report of the Basic Energy Science Workshop in Electrical Energy Storage. U.S. Department of Energy, April 2007." The accepted mechanism for this dates back to 1853, when von Helmholtz discovered the electrochemical double layer. See H. von Hehnholtz, Ann. Phys. (Leipzig) 89 (1853) 211. If two electrodes are immersed in an electrolyte, a single layer of negative ions from the electrolyte will form in close proximity to the positive electrode and a second layer of electrolyte with a preponderance of positive ions will form proximate the aforementioned negative ions, forming the so-called "Helmholtz double layer." A similar process occurs at the opposite negative electrode, though in this case the positive ions form the layer closest to the electrode - this is shown schematically in Figure 1.

Because the Helmholtz double layer forms only at the interface between electrode and electrolyte, it is necessary to create a structure that maximizes this interfacial region. Traditionally, EDL supercapacitors have been made with high surface area carbon powders and aqueous electrolytes. See B.E. Conway, Electrochemical Supercapacitors-Scientific Fundamentals and Technological Applications, Kluwer, New York, 1999. However, the capacitance of an EDL supercapacitor does not always scale with surface area. The most porous carbon powders with the highest surface areas as measured by BET methods sometimes have lower capacitances than other, lower surface area materials. This is usually explained as due to the fact that some pores are the wrong size to form double layer structures.

Some authors have investigated capacitors that use pseudocapacitance to boost the effective capacitance of an electrode material. In addition to the energy stored by charge separation in the Helmholtz double layer, pseudocapacitors stabilize stored charge in the electrode material by changing the oxidation state of one of the constituents, usually a transition metal that exhibits multiple oxidation states. In this respect, pseudocapacitors are similar to electrochemical batteries, but with a very important difference: in many electrochemical batteries, for example, lithium-ion cells, the change in oxidation state of the variable oxidation state metal is accompanied by solid state diffusion of the mobile ions from the electrolyte into the bulk of the active electrode material (in lithium-ion cells, lithium ions diffuse into the bulk of the active electrode material). This process leads to structural changes in the active electrode material and is believed to be a major factor that contributes to the limited cycle lives of rechargeable electrochemical batteries. In contrast, true pseudocapacitance occurs only at the surface - mobile ions from the electrolyte do not diffuse into the bulk of the active electrode material. Ruthenium dioxide (RuO₂) and manganese dioxide (MnO₂) have been proposed as active materials for pseudocapacitors. In several U.S. patents issued to date, Lee *et al.* described pseudocapacitors containing carbon/amorphous manganese dioxide electrodes that exhibited high specific capacitances in excess of 600 F/g.

Capacitors and pseudocapacitors based on aqueous electrolytes are usually limited to maximum operating cell voltages of slightly over 1V - higher voltages lead to unwanted electrolysis of the electrolyte. More recent EDL supercapacitors have used organic solvent-based electrolytes (see K. Yuyama, G. Masuda, H. Yoshida, and T. Sato, "Ionic liquids containing the tetrafluoroborate anion have the best performance and stability for electric double layer capacitor applications," Journal of Power Sources 162, 1401 (2006)) or even polymeric electrolytes (see "Polymer Capacitor Catching Up with Li-ion Battery in Energy Density", Nikkei Electronics Asia magazine (2009)) to boost the maximum voltage between electrodes without initiating electrolysis of the electrolyte. This in turn increases the maximum energy that can be stored in these capacitors. Recently, Eamex Corporation has claimed an energy density of 600 Wh/liter for a hybrid-EDL supercapacitor that contains an electrode that can reversibly incorporate mobile lithium ions from the polymeric electrolyte. See "Polymer Capacitor Catching Up with Li-ion Battery in Energy Density", Nikkei Electronics Asia magazine (2009).

In a patent issued in 2006, (U.S. Patent 7,033,406) the inventors described an electrical energy storage unit (EESU) capable of storing over 300 Wh/kg and well-suited for electric automobile applications. This device was essentially a multilayer ceramic capacitor with metal electrodes and a composite dielectric, consisting of particles of a relaxor ferroelectric (modified barium titanate) surrounded by aluminum oxide shells and embedded in a matrix of high dielectric-strength glass. In their preamble, the inventors assumed a modified barium titanate particle volume of ∼1 µm³, an alumina shell about 100 Å thick and an additional coating of calcium magnesium aluminosilicate glass, also ∼ 100Å thick. 3500 V was applied across 12 µm of composite dielectric and the extremely high specific energy achieved was believed to be the sum of that from the charge separation generated at both electrodes and the polarization that occurred inside the ferroelectric particles under the influence of these exceptionally high field strengths. In a later patent (U.S. Patent 7,466,536), the inventors described a similar device where the relaxor ferroelectric particles were again coated with aluminum oxide and embedded in a polymer matrix. This allowed lower temperature processing which in turn allowed the use of aluminum electrodes, lowering the unit's cost and weight and boosting its specific energy to over 400 Wh/kg. If it transpires that these devices can be made commercially, they will revolutionize the electrical energy storage industry. However, other studies on similar structures have raised concerns about whether the data of the inventors can be reproduced.

Much attention has been paid to developing energy storage devices containing nanoparticles, especially for advanced lithium-ion batteries and electrochemical supercapacitors, where maximizing interfacial contact areas and minimizing the length of solid-state diffusion paths increases specific power output. Some studies have shown that for ferroelectric materials below a critical particle diameter of 10-50 nm, the relative permittivity of certain dielectric and ferroelectric materials, including barium titanate, increases exponentially with decreasing particle size. This effect has been attributed to quantum instabilities that manifest themselves when particle dimensions shrink below the exciton Bohr radius.

### Disadvantages of the Prior Art

Compared to electrochemical batteries, existing EDL supercapacitors store relatively small amounts of electrical energy per unit mass or volume and they are electrically leaky, meaning that they cannot store their charge over extended periods of time. They have a lower cycle life and peak power output than electrostatic capacitors, though here they are vastly superior to electrochemical batteries.

The aforementioned hybrid-EDL supercapacitor that uses one electrode that can reversibly incorporate mobile lithium ions from the polymeric electrolyte has one of the drawbacks associated with electrochemical batteries, namely that chemical changes take place during charge/discharge cycles (in the prior art referenced herein, lithium ions undergo a redox reaction at the positive electrode, forming a lithium alloy when the device is discharged). Such chemical reactions may compromise the overall cycle life of these hybrid capacitors.

The prior art (see U.S. Patents 6,339,528; 6,496,357; 6,510,042; and 6,616,875) described a method for fabricating an electrode comprising carbon, amorphous manganese dioxide and conductive polymer, but the device is not optimized for several reasons:
1) The method for combining carbon and manganese oxide does not control the amount and thickness of amorphous manganese dioxide incorporated into the electrode structure. This is important because manganese dioxide is widely used as an active cathode material in Leclanché, alkaline manganese and primary lithium batteries: in these devices, hydrogen and lithium ions are known to intercalate into the manganese dioxide and lead to structural changes - it is worth noting that none of these batteries are considered rechargeable. If the electrodes in the capacitors described by the prior art are left in their discharged state for long periods of time, there is the possibility that solid state diffusion of hydrogen or lithium ions can occur into regions of manganese dioxide that are not in intimate contact with the electrolyte, i.e., not at the surface. Repeated cycling could lead to structural changes in the bulk of the manganese dioxide and compromise the cycle life and/or capacitance of the capacitor.
2) The use of an electrically conducting polymer as a "binder" to ensure good electrical contact between the active material (manganese dioxide) and the carbon particles that impart electrical conductivity to the electrode will act to prevent intimate contact between the electrolyte and the active material, reducing the effective surface area. This effect will also serve to exacerbate the problem described in 1) above.
3) The prior art does not provide means to control the sizes and distribution of the pores in the composite electrodes. Thus, some of the pores will be too small for the electrolyte to penetrate and the active material in these pores will not contribute to the overall cell capacitance, while other pores will be larger than optimum and will therefore lower the overall average capacitance density.

Some of the devices described by the prior art contain relaxor ferroelectric materials in the composite dielectrics. Such materials are known to undergo dielectric saturation when exposed to high electric fields. At the maximum operating field of 3 MV/cm that the prior art proposes for the device, other authors have observed dielectric saturation in barium titanates and related materials. Although the data given by U.S. Patent 7,466,536 directly addresses this concern, to our knowledge, other groups following the recipes listed in the patent have been unable to reproduce these results. Until the claimed energy densities can be validated by others, the device performance claimed by U.S. Patent 7,466,536 must be viewed with a degree of skepticism.

### Objects of the Invention

Based on the limitations of the prior art, there is a need for an improved electrochemical double layer supercapacitor that can store its charge over extended periods of time.

Nothing in the prior art provides the benefits attendant with the present invention. Therefore, it is an object of the present invention to provide an improvement which overcomes the inadequacies of the prior art.

Another object of the present invention is to provide a supercapacitor-like electronic battery comprising: a conventional electrochemical capacitor structure; a first nanocomposite electrode positioned within said conventional electrochemical capacitor structure, said first nanocomposite electrode having first conductive core-shell nanoparticles in a first electrolyte matrix; a second electrode positioned within said conventional electrochemical capacitor structure; an electrolyte within said conventional electrochemical capacitor structure, said electrolyte separating said nanocomposite electrode and said second electrode; a first current collector in communication with said nanocomposite electrode; and a second current collector in communication with said second electrode.

Yet another object of the present invention is to provide an electrostatic capacitor-like electronic battery comprising: a first electrode; a second electrode; a high dielectric-strength insulating matrix separating said first electrode from said second electrode; and a plurality of core-shell nanoparticles, each of said core-shell nanoparticles having a conductive core and an insulating shell, said core-shell nanoparticles dispersed in said high dielectric-strength insulating matrix.

Still yet another object of the present invention is to provide a method for fabricating a single cell of a supercapacitor-like electronic battery comprising: providing a first conductive surface, said first conductive surface acting as a first current collector; placing a first nanocomposite electrode in contact with said first conductive surface, the formation of said first nanocomposite electrode comprising the steps of: (a) providing first nanoparticles having a first conductive core or a first semiconducting core; (b) processing said first nanoparticles to form a first thin shell around said first conductive core of said first nanoparticles; (c) attaching first ligands to said processed first nanoparticles; and (d) dispersing said processed first nanoparticles with said attached first ligands into a first electrolyte matrix, said dispersed first nanoparticles having a first concentration exceeding the percolation limit of said first electrolyte matrix; applying an electrolyte-containing layer to said first nanocomposite electrode; forming a second electrode; introducing said second electrode onto said electrolyte on an opposing side to said first nanocomposite electrode; placing a second conductive surface in contact with said second electrode, said second conductive surface acting as a second current collector; and hermetically sealing said first conductive surface, said first nanocomposite electrode, said electrolyte, said second electrode, and said second conductive surface.

Another object of the present invention is to provide a method for fabricating an electrostatic capacitor-like electronic battery comprising: providing a first metal electrode having a first surface; providing a second metal electrode having a second surface; providing nanoparticles having a conductive core or a semiconducting core; processing said nanoparticles to form a thin shell around the core of said nanoparticles; attaching ligands to said processed nanoparticles; and dispersing said processed nanoparticles with said attached ligands into a high dielectric-strength matrix to form a composite dielectric; applying said composite dielectric to said first surface of said first metal electrode and to said second surface of said second electrode; and hermetically sealing said first metal electrode, said composite dielectric, and said second electrode.

The foregoing has outlined some of the pertinent objects of the present invention. These objects should be construed to be merely illustrative of some of the more prominent features and applications of the intended invention. Many other beneficial results can be attained by applying the disclosed invention in a different manner or modifying the invention within the scope of the disclosure. Accordingly, other objects and a fuller understanding of the invention may be had by referring to the summary of the invention and the detailed description of the preferred embodiment in addition to the scope of the invention defined by the claims taken in conjunction with the accompanying drawings.

### Summary of the Invention

It is the purpose of this invention to fabricate a capacitor that takes advantage of the properties of core-shell nanoparticles: these can be utilized in one or both electrodes of an electrochemical capacitor, or in the dielectric of an electrostatic capacitor. When used in the electrode, the core-shell nanoparticles should form a conductive ensemble in a matrix of electrolyte. They should have radii slightly larger than their exciton Bohr radii and adjacent particles should be sufficiently close to permit electron tunnelling between them.

When used in the dielectric, the core-shell nanoparticles should comprise a metal or semiconducting core surrounded by an insulating shell that separates the cores from each other and from the high dielectric-strength matrix. In cases where the core is metallic, the particles should be sufficiently small and separated from one another so as to suppress electronic conductivity and tunnelling. In cases where the core is a semiconductor, a preferred embodiment involves the use of particles with radii smaller than their exciton Bohr radii.

Because such capacitors have the potential to store significant amounts of energy, of similar magnitude to some electrochemical batteries, while storing most of their energy by charge separation, we have coined the term "electronic batteries" to describe such devices.

A feature of the present invention is to provide an improved supercapacitor-like electronic battery comprising a conventional electrochemical capacitor structure. A first nanocomposite electrode and a second electrode and an electrolyte are positioned within the conventional electrochemical capacitor structure. The second electrode can further comprise a reversible electrode, an irreversible electrode, a surface reactive electrode or a nanocomposite electrode. The electrolyte separates the nanocomposite electrode and the second electrode. The first nanocomposite electrode has first conductive core-shell nanoparticles in a first electrolyte matrix. If the second electrode is a nanocomposite electrode, the second electrode can further comprise second conductive core-shell nanoparticles in a second electrolyte matrix. The conductive core-shell nanoparticles can further comprise a shell having an element exhibiting a variable oxidation state. The conductive core-shell nanoparticles can further comprise a reversible shell and an irreversible core. The conductive core-shell nanoparticles can further comprise a core of a single element surrounded by a shell comprising a simple binary compound of the same element as the core. The conductive core-shell nanoparticles can further comprise a metal core or a semiconducting core. The semiconducting cores can further comprise nano-scale semiconducting particles having an average radius larger than the appropriate exciton Bohr radius. A first current collector is in communication with the nanocomposite electrode and a second current collector is in communication with the second electrode.

In a preferred embodiment, the first conductive core-shell nanoparticles can further comprise a first conductive core or a first semiconducting core having a first diameter of less than 100 nm and the second conductive core-shell nanoparticles can further comprise a second conductive core or a second semiconducting core having a second diameter of less than 100 nm.

In another preferred embodiment, the first shell can further comprise a first surface that is chemically reactive to mobile ions contained in the first electrolyte matrix where the chemical reaction is confined to the first surface and the second shell can further comprise a second surface that is chemically reactive to mobile ions contained in the second electrolyte matrix where the chemical reaction is confined to the second surface.

In another preferred embodiment, the first shell can further comprise a first near surface region that is chemically reactive to mobile ions contained in the first electrolyte matrix where the chemical reaction is confined to the first near surface region and the second shell can further comprise a second near surface region that is chemically reactive to mobile ions contained in the second electrolyte matrix where the chemical reaction is confined to the second near surface region.

In another preferred embodiment, the first nanocomposite electrode can further comprise first nano-scale conductive core-shell particles having a first concentration and a first size such that the percolation threshold of the first nano-scale conductive core-shell particles in the first nanocomposite electrode is exceeded and the second nanocomposite electrode can further comprise second nano-scale conductive core-shell particles having a second concentration and a second size such that the percolation threshold of the second nano-scale conductive core-shell particles in the second nanocomposite electrode is exceeded.

In another preferred embodiment, the first nano-scale conductive particles can further comprise a first size and a first distance between the first nano-scale conductive particles to allow for electron tunneling between adjacent nano-scale conductive particles, thereby ensuring that the first nanocomposite electrode is electrically conductive and the second nano-scale conductive particles can further comprise a second size and a second distance between the second nano-scale conductive particles to allow for electron tunneling between adjacent nano-scale conductive particles, thereby ensuring that the second nanocomposite electrode is electrically conductive.

Another feature of the present invention is to provide an electrostatic capacitor-like electronic battery comprising a first electrode and a second electrode that are separated by a high dielectric-strength insulating matrix. A plurality of core-shell nanoparticles having a conductive core and an insulating shell are dispersed in the high dielectric-strength insulating matrix. The conductive cores can further comprise a metal or a semiconductor. The semiconducting cores can further comprise nano-scale semiconducting particles having an average radius less than or equal to the appropriate exciton Bohr radius. The core-shell nanoparticles can further comprise a core of a single element surrounded by a shell comprising a simple binary compound of the same element as the core. The insulating shell can further comprise a high dielectric-strength material.

Still another feature of the present invention is to provide a method for fabricating a single cell of a supercapacitor-like electronic battery. The method comprising the following steps. A first nanocomposite electrode is formed onto a first conductive surface where the first conductive surface acts as a first current collector. The formation of the first nanocomposite electrode comprising the steps of: (a) providing first nanoparticles having a first conductive core or a first semiconducting core; (b) processing the first nanoparticles to form a first thin shell around the first conductive core of the first nanoparticles; (c) attaching first ligands to the processed first nanoparticles; and (d) dispersing the processed first nanoparticles with the attached first ligands into a first electrolyte matrix where the dispersed first nanoparticles have a first concentration exceeding the percolation limit of the first electrolyte matrix. An electrolyte-containing layer is applied to the first nanocomposite electrode. A second electrode is formed and introduced onto the electrolyte on an opposing side to the first nanocomposite electrode. A second conductive surface is placed in contact with the second electrode where the second conductive surface acts as a second current collector. The first conductive surface, first nanocomposite electrode, electrolyte, second electrode, and second conductive surface are hermetically sealed.

In alternative preferred embodiments, the second electrode can further comprise a reversible electrode, an irreversible electrode, a surface reactive electrode or a nanocomposite electrode. The second nanocomposite electrode comprising the steps of: (e) providing second nanoparticles having a second conductive core or a second semiconducting core; (f) processing said second nanoparticles to form a second thin shell around the second conductive core of the second nanoparticles; (g) attaching second ligands to the processed second nanoparticles; and (h) dispersing the processed second nanoparticles with the attached second ligands into a second electrolyte matrix where the dispersed second nanoparticles have a second concentration exceeding the percolation limit of the second electrolyte matrix.

In a preferred embodiment, the first conductive core-shell nanoparticles can further comprise a first conductive core or a first semiconducting core having a first diameter of less than 100 nm and the second conductive core-shell nanoparticles can further comprise a second conductive core or a second semiconducting core having a second diameter of less than 100 nm.

In a preferred embodiment, the first semiconducting core of the first nanoparticles can further comprise a first radius that exceeds the exciton Bohr radius and the second semiconducting core of the second nanoparticles can further comprise a second radius that exceeds the exciton Bohr radius.

Still yet another feature of the present invention is to provide a method for fabricating an electrostatic capacitor-like electronic battery. The method comprising the following steps. A first metal electrode having a first surface is provided. A second metal electrode having a second surface is provided. Nanoparticles having a conductive core or a semiconducting core are provided. The core of the nanoparticles can further comprise a diameter less than or equal to 100 nm. The semiconducting core of the nanoparticles can further comprise a radius that is less than or equal to the exciton Bohr radius. The nanoparticles are processed to form a thin shell around the core of the nanoparticles. Ligands are attached to the processed nanoparticles. The processed nanoparticles with attached ligands are dispersed into a high dielectric-strength matrix to form a composite dielectric. The composite dielectric is applied to the first surface of the first metal electrode and to the second surface of the second electrode. The first metal electrode, composite dielectric, and second electrode are hermetically sealed.

The foregoing has outlined rather broadly the more pertinent and important features of the present invention in order that the detailed description of the invention that follows may be better understood so that the present contribution to the art can be more fully appreciated. Additional features of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

Figure 1 is a schematic view of an electrochemical double layer according to one embodiment of the present invention;
Figure 2 is a schematic cross-section view of a single cell of an electronic battery according to one embodiment of the present invention;
Figure 3 is a schematic cross-section view of a single cell of an electrostatic capacitor with core-shell nanocomposite dielectric according to one embodiment of the present invention; and
Figure 4 is a schematic cross-section view of a multi-layer electronic battery according to one embodiment of the present invention.

Similar reference characters refer to similar parts throughout the several views of the drawings.

### Detailed Description of the Invention

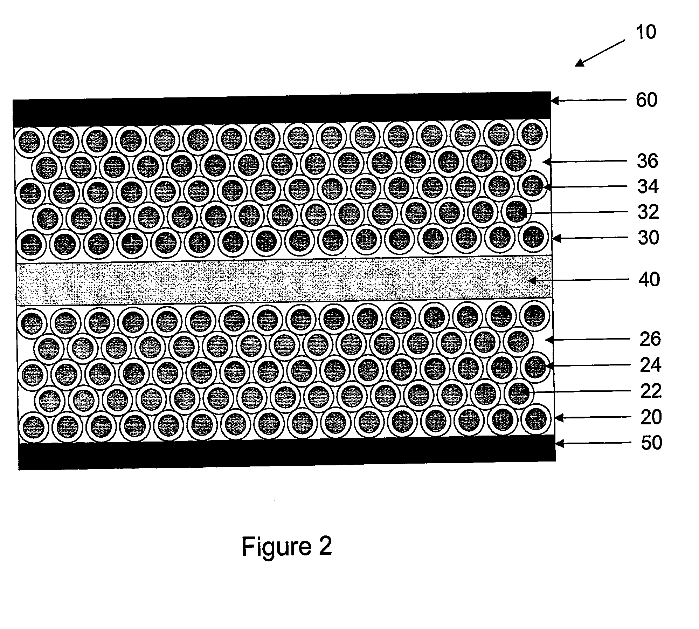

A schematic of the cell structure of an electronic battery according to the current invention is shown in Figure 2. The cell comprises the conventional electrochemical capacitor structure (not shown): two electrodes 20, 30 are separated by a region that contains only electrolyte 40 and are provided with current collectors 50, 60 on their opposing faces. Preferred electrolytes 40 include materials that contain mobile ions of lithium, sodium, potassium, hydrogen (both H⁺ and H⁻), copper and/or silver and can take the form of an aqueous solution of a dissolved ionic chemical compound (or compounds), a non-aqueous solution of a dissolved ionic chemical compound (or compounds), a polymer electrolyte, a gel electrolyte, a solid electrolyte or a molten salt electrolyte. In cases where the electrolyte 40 is a liquid or a gel, it should contain a porous nonconductive solid to prevent the two conductive electrodes 20, 30 from shorting together, since it is advantageous that the gap between the two electrodes 20, 30 is kept very small to minimize equivalent series resistance (ESR) and maximize the power and energy densities of the capacitor 10. In the case where the electrolyte 40 is a molten salt, it may be particularly advantageous to incorporate the structure described in S. V. Pan'kova, V. V. Poborchii and V. G. Solov'ev, "The giant dielectric constant of opal containing sodium nitrate nanoparticles", J. Phys.; Condensed Matter 8, L203-L206 (1996) where a molten salt electrolyte is chemically infiltrated into a synthetic opal framework. It should be recognized that the porous matrix need not be limited to synthetic opal (SiO₂) structures, but that insulating matrices of alumina, aluminosilicates, etc., that are known to those skilled in the art could also be infiltrated with molten salt electrolytes. Examples of suitable candidate molten salt electrolytes include those based on the low melting temperature mixtures of nitrates of lithium and potassium, and on AlCl₃ with suitable additives (e.g., NaAlCl₄) that are known to lower its melting point and increase its ionic conductivity.

The electrodes 20, 30 themselves are each nanocomposites: they are comprised of nano-scale conductive particles 22, 32, in a preferred embodiment < 100 nm in diameter, surrounded by a shell 24, 34 of dissimilar material and dispersed in an electrolyte matrix 26, 36. The electrolyte matrix 26, 36 can take the form of an aqueous solution of a dissolved ionic chemical compound (or compounds), a non-aqueous solution of a dissolved ionic chemical compound (or compounds), a polymer electrolyte, a gel electrolyte, a solid electrolyte or a molten salt electrolyte. The concentration and size of the conductive cores 22, 32 should exceed the percolation threshold of the material, thereby ensuring that the electrodes 20, 30 are electrically conducting. In cases where the particles are spherical, the maximum volume fraction that can be achieved by close packing spheres is ∼ 74% but for cubic or cuboidal particles, this limit can be exceeded. In a preferred embodiment, the nanoparticles and the distances between them should be sufficiently small to allow for electron tunnelling between adjacent particles, thereby ensuring that the electrode structure is electronically conducting. In a preferred embodiment in cases where semiconducting cores 22, 32 are utilized, to maintain electrical conductivity, the average size of the particles should be larger than the appropriate exciton Bohr radius - smaller particles will behave as insulators, thereby causing an unwanted increase in the equivalent series resistance (ESR) and limiting the power density of the device.

When core-shell nanoparticles are used in the electrodes of supercapacitors, the shells serve two primary purposes: (i) to maximize the capacitance of the electrode structure, and (ii) to provide a surface to which a suitable functional ligand (not shown) can attach. Functionalizing nanoparticles with suitable ligands prevents agglomeration and allows dispersal in the electrolyte medium. The shells should be engineered so as not to disrupt the electronic transport through the electrode: they can be conductors, semiconductors or insulators, though in the latter instance, insulating shells should be extremely thin so that electron tunnelling can occur between the conductive cores of adjacent nanoparticles.

The interaction between the shells and the ions of the electrolyte can be purely capacitive - the ions at the interface between nanoparticle and electrolyte forming an electrochemical double layer structure - or pseudocapacitive, where in addition to the formation of a double layer structure, electron exchange occurs and energy is stored Faradaically by changing the oxidation state of one of the elements comprising the shell. In a preferred embodiment, the shell should prevent intercalation of the mobile ion (or ions) of the electrolyte into its structure or at least limit their penetration depth to the surface or near surface region. When suitably thin shells are used, this will be ensured if the conductive core is irreversible to the ions in question, for example, metals such as iron, nickel, molybdenum and tungsten are irreversible to lithium ions at ambient temperature.

Preferably, the ligands chosen to functionalize the nanoparticles should prevent agglomeration between adjacent nanoparticles while either enhancing (or at least not interfering with) the interfacial capacitance. In practice, it is difficult to ensure that 100% of the core-shell nanoparticle is covered by the ligand and this is not essential, both to prevent agglomeration and to ensure that the electrolyte wets the particles.

In a preferred embodiment, the radius of semiconductor core-shell nanoparticles should slightly exceed the exciton Bohr radius, thereby ensuring electronic conductivity of the composite electrode while providing for the maximum effective interfacial area between the nanoparticles and the electrolyte, which in turn leads to a higher capacitance. Typical exciton Bohr radii range from ∼ 25 nm for Ge to ∼ 5 nm for most semiconductors and insulators.

Although both electrodes of the supercapacitor-like devices described heretofore have consisted of nanocomposites comprising core-shell nanoparticles, it should be appreciated that it is a simple undertaking to substitute one of the nanocomposite electrodes with a more conventional supercapacitor-type electrode: examples include an electrode structure containing an irreversible conductor and an electrolyte (electrochemical double-layer capacitor type); an electrode structure containing a surface reactive conductor and an electrolyte (pseudocapacitor type); or an electrode structure containing a reversible conductor and an electrolyte, such as is typically incorporated into a battery-type hybrid capacitor.

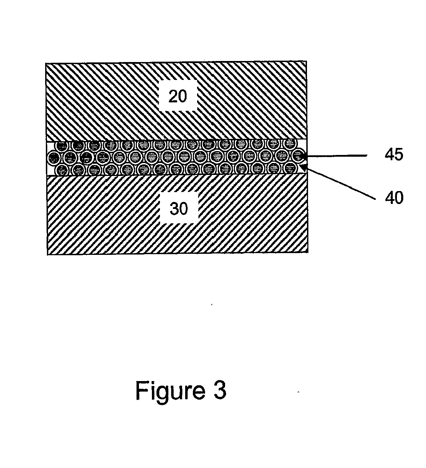

The effective relative permittivities of conductors and semiconductors are very high and are not subject to the same dielectric saturation as relaxor ferroelectrics. Below a critical particle size, ensembles of conducting or semiconducting nanoparticles are insulating. By surrounding these conductive nanoparticles with insulating shells, the electronic conductivity of the nanoparticles can be suppressed and even at high electric field strengths, electron tunnelling will not occur, up to the point of dielectric breakdown. Such core-shell nanoparticles can be used advantageously in the dielectrics of electrostatic capacitors where it is important that the nanocomposite is a good insulator. As shown in Figure 3, for this application, core-shell nanoparticles 45 are functionalized with suitable ligands (not shown) and dispersed in a high dielectric-strength insulating matrix 40 with a first electrode 20 and a second electrode 30. Examples of high dielectric-strength matrix materials include certain polymers and glasses, including but not limited to PVDF, PET, PTFE, FEP, FPA, PVC, polyurethane, polyester, silicone, some epoxies, polypropylene, polyimide, polycarbonate, polyphenylene oxide, polysulfone, calcium magnesium aluminosilicate glasses, E-glass, alumino-borosilicate glass, D-glass, borosilicate glass, silicon dioxide, quartz, fused quartz, silicon nitride, silicon oxynitride, etc. In a preferred embodiment, the radii of the core-shell nanoparticles should be of similar magnitude to or smaller than the exciton Bohr radii of the chosen materials, so as to take advantage of the increased permittivity and energy storage capacity attributed to quantum instabilities that manifest themselves when particle dimensions shrink below the exciton Bohr radius.

Core-shell nanoparticles can be fabricated by methods known to those skilled in the art. The simplest core-shell structures use a core of a single element surrounded by a shell comprising a simple binary compound of the same element as the core. The conductive cores can be selected from a variety of conductive materials including all metals and semiconductors. In a preferred embodiment, light materials are preferred: lighter particles lead to higher specific energies. In applications where energy per unit volume (energy density) is more important than energy per unit weight (specific energy), heavier conductive nanoparticle core materials can be considered where they are more cost effective. Examples include core/shells of the following materials: Al/AlOₓ; Ge/GeOₓ; Si/SiOₓ; Sc/ScOₓ; Ti/TiOₓ; V/VOₓ; Cr/CrOₓ; Mn/MnOₓ; Fe/FeOₓ; Co/CoOₓ; Ni/NiOₓ; Cu/CuOₓ; Zn/ZnOₓ; Y/YOₓ; Zr/ZrOₓ; Nb/NbOₓ; Mo/MoOₓ; Ru/RuOₓ; Ag/AgOₓ; Cd/CdOₓ; Ln/LnOₓ; Hf/HfOₓ; Ta/TaOₓ; W/WOₓ; Re/ReOₓ; Os/OsOₓ; In/InOₓ; Sn/SnOₓ; Tl/TlOₓ; Pb/PbOₓ; Bi/BiOₓ; Al/AlSₓ; Ge/GeSₓ; Si/SiSₓ; Sc/ScSₓ; Ti/TiSₓ; V/VSₓ; Cr/CrSₓ; Mn/MnSₓ; Fe/FeSₓ; Co/CoSₓ; Ni/NiSₓ; Cu/CuSₓ; Zn/ZnSₓ; Y/YSₓ; Zr/ZrSₓ; Nb/NbSₓ; Mo/MoSₓ; Ru/RuSₓ; Ag/AgSₓ; Cd/CdSₓ; Ln/LnSₓ; Hf/HfSₓ; Ta/TaSₓ; W/WSₓ; Re/ReSₓ; Os/OsSₓ; In/InSₓ; Sn/SnSₓ; Tl/TlSₓ; Pb/PbSₓ; Bi/BiSₓ; Al/AlFₓ; Ge/GeFₓ; Sc/ScFₓ; Ti/TiFₓ; V/VFₓ; Cr/CrFₓ; Mn/MnFₓ; Fe/FeFₓ; Co/CoFₓ; Ni/NiFₓ; Cu/CuFₓ; Zn/ZnFₓ; Y/YFₓ; Zr/ZrFₓ; Nb/NbFₓ; Mo/MoFₓ; Ru/RuFₓ; Ag/AgFₓ; Cd/CdFₓ; Ln/LnFₓ; Hf/HfFₓ; Ta/TaFₓ; W/WFₓ; Re/ReFₓ; Os/OsFₓ; In/InFₓ; Sn/SnFₓ; Tl/TlFₓ; Pb/PbFₓ; Bi/BiFₓ; Al/AlNₓ; Ge/GeNₓ; Si/SiNₓ; Sc/ScNₓ; Ti/TiNₓ; V/VNₓ; Cr/CrNₓ; Mn/MnNₓ; Fe/FeNₓ; Co/CoNₓ; Ni/NiNₓ; Cu/CuNₓ; Zn/ZnNₓ; Y/YNₓ; Zr/ZrNₓ; Nb/NbNₓ; Mo/MoNₓ; Ru/RuNₓ; Ag/AgNₓ; Cd/CdNₓ; Ln/LnNₓ; Hf/HfNₓ; Ta/TaNₓ; W/WNₓ; Re/ReNₓ; Os/OsNₓ; In/InNₓ; Sn/SnNₓ; Tl/TlNₓ; Bi/BiNₓ; metal/metal carbides, metal/metal borides, etc., where x is a variable depending on the chemical compound and Ln represents the members of the lanthanide family of elements. In the case of those core-shell nanoparticles that are intended for use in Faradaic pseudocapacitor electrodes, it is particularly advantageous that the shell contain an element that can exhibit a variable oxidation state, e.g., a transition metal, some of the lanthanide elements, Sn, Tl and Pb. In contrast, when the core-shell nanoparticles are intended to be incorporated into the dielectric of an electrostatic capacitor, it is advantageous that the shell comprise a high dielectric-strength material such as Al₂O₃, AlF₃, SiO₂, SiNₓ or GeO₂.

More complex core-shell structures can be envisaged where the core and shell are tailored for a particular application, for example, in a supercapacitor that uses a lithium electrolyte, it may be particularly advantageous to combine an inexpensive core metal such as iron that is irreversible to lithium ions (thereby preventing diffusion of lithium ions into the core) with a transition metal oxide or fluoride that can store more energy Faradaically than the corresponding iron oxide or fluoride: examples include the compounds of vanadium, chromium, manganese and cobalt. In cases where the supercapacitor has a asymmetric hybrid or battery-type hybrid configuration, it can be advantageous to design the nanoparticle shell such that the element with the variable oxidation state contained therein is in a high oxidation state at the positive electrode (cathode) and in a low oxidation state at the negative electrode (anode). In these more complex structures, the core-shell particles are best fabricated in a two step process: by way of illustration, for the example given that uses an iron core, first iron nanoparticles are fabricated to act as the core and are then coated with the desired shell in a subsequent step, using methods similar to those typically used to attach the ligands and known to those skilled in the art.

In order to prevent the core-shell nanoparticles from agglomerating, they should be coated with suitable ligands. These should be chosen to contain one or more functional groups that cause the ligands to attach firmly to the shell of the nanoparticles and also to be wetted by the matrix (electrolyte in the case of supercapacitors and high dielectric-strength insulator in the case of electrostatic capacitors). In a preferred embodiment, the ligands should be compatible with the process or processes used to form the shell on the core of the nanoparticle, for example, when the core-shell nanoparticle is simply an elemental core surrounded by its oxide, a simple controlled oxidation process is able to create such a structure. In this case, preferably the ligand should be able to withstand the oxidation conditions, allowing the shell to be formed and the ligand attached in the same reactor. Examples of suitable ligands include but are not limited to chemical compounds containing the following: trioctophospine oxide (TOPO), phosphonic acids, sulfonic acids, trialkoxysilanes, carboxylic acids, alkyl and aryl halides, etc. In cases where the core-shell nanoparticles are to be dispersed into polymers, prior art has shown that ligands containing alkoxy groups are effective for allowing polar, hydrophilic resins and solvents to wet the nanoparticles, while fluorinated aryl groups are effective for fluorinated polymers and many common organic solvents. See P. Kim, S.C. Jones, P. J. Hotchkiss, J. N. Haddock, B. Kippelen, S. R. Marder and J. W. Perry, "Phosphonic Acid-Modified Barium Titanate Polymer Nanocomposites with High Permittivity and Dielectric Strength", Adv. Mater. 19, 1001-1005 (2007). Often, suitable ligands contain long aliphatic or aromatic carbon skeletons (octyl- and above in the case of aliphatic chains).

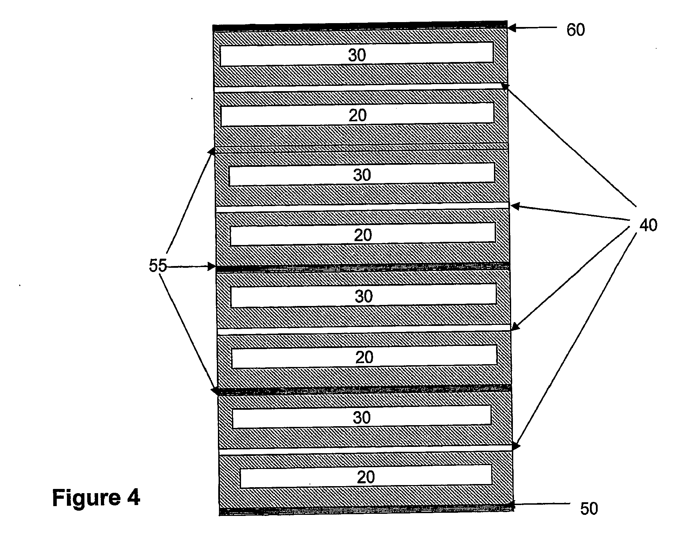

In the case of an electrochemical supercapacitor, the maximum voltage across the electrodes is limited by the electrochemical stability range of the electrolyte. For thermodynamic stability, this is limited to ∼ 7V, though some solid electrolytes have kinetic stability limits that are significantly higher. By stacking individual cells together in a bipolar configuration as shown in Figure 4, it is possible to fabricate electronic batteries with much higher operating voltage ranges (hundreds of volts, kV or even MV), limited only by practical considerations. A schematic of a multi-layer electronic battery is shown in Figure 4 as a first current collector 50, alternating first electrodes 20, electrolyte separators 40, alternating second electrodes 30, conductive barriers 55, and a second current collector 60. Such stacks would require control circuitry to account for differences in impedance between the various cells during charging and discharging, but this technology has already been developed for lithium-ion batteries (see R. S. Tichy and M. Borne, "Building Battery Arrays with Lithium-Ion Cells", Micro Power Webinar, March 2009) and could easily be modified to function with high voltage serially connected electronic battery stacks. Note that the composition of the positive and negative electrodes of the electronic battery structure described herein may be formulated differently.

In the case of an electrostatic capacitor, the maximum voltage across the electrodes is limited by the dielectric-strength of the capacitor dielectric. For materials with dielectric-strengths of ∼ 5 MV/cm and with thicknesses of - 2 microns, it is theoretically feasible to fabricate capacitors that can operate at up to 1 kV. For thicker dielectrics, operating voltages can be higher.

### Fabrication of a Supercapacitor-Type Electronic Battery according to the present invention

We now describe a sequence for fabricating a single cell of a supercapacitor-type electronic battery according to the present invention. First, conductive or semiconducting nanoparticles are made according to prior art. In a preferred embodiment, these nanoparticles have diameters ≤ 100 nm, with a narrow size distribution, optimally within ± 10% of their nominal size. Ideally, in the case of semiconducting cores, the particles should have a radius that just exceeds the exciton Bohr radius.

In a second step, these nanoparticles are processed to form a thin shell around them. In a preferred embodiment, this shell should interact with the electrolyte matrix to create a large pseudocapacitance and this can be advantageously achieved if an element or elements of variable oxidation state are incorporated into the shell.

Third, a suitable ligand is attached to the core-shell nanoparticles so that they can be wetted by the electrolyte medium of choice. Steps 2 and 3 can be combined into a single chemical reaction, depending on the functionality that is desired and the availability of suitable ligands.

In a fourth step, the core-shell nanoparticles surrounded by their ligands are dispersed in an electrolyte matrix above the percolation limit where the nanocomposite becomes electronically conductive. In a preferred embodiment, the amount of nanoparticles dispersed in the electrolyte matrix should exceed 50% by volume. Preferably, the electrolyte matrix should be in a liquid state while the nanoparticles are dispersed therein. In cases where the electrolyte is a polymer electrolyte, the nanoparticles should be dispersed prior to final polymerization. In cases where the electrolyte is a molten salt, the nanoparticles should be added while it is in its molten state. This step should be performed in a container of appropriate size and shape to hold the nanocomposite electrode in place for subsequent fabrication steps. In a preferred embodiment, one surface of said container should be conductive to act as a current collector in the final assembly.

In a fifth step, the electrolyte (and if required, porous separator) should be applied to the nanocomposite electrode. The electrolyte can be in the form of an aqueous solution of a dissolved ionic chemical compound (or compounds), a non-aqueous solution of a dissolved ionic chemical compound (or compounds), a polymer electrolyte, a gel electrolyte, a solid electrolyte or a molten salt electrolyte: there are a myriad of electrolyte materials used in batteries and electrochemical capacitors that are suitable for use in the device described here and that are well known to those skilled in the art.

In a sixth step, a second nanocomposite electrode prepared in a manner analogous to the method described in steps 1-4, is introduced onto the electrolyte on the side opposing the first nanocomposite electrode. A conductive surface is placed in contact with the second nanocomposite electrode (but electrically isolated from the first nanocomposite electrode) so as to act as a current collector and the device is sealed. Alternatively, both current collectors can be fabricated by using thin film or thick film coating methods to apply a conductive material to the sides/faces of the nanocomposite electrodes opposing the electrolyte/separator.

In the seventh and final step, the device is hermetically sealed in an inert environment to prevent oxygen and/or water from degrading the core-shell nanoparticles or other components over time.

It should also be appreciated that it is possible to fabricate a device where just one of the electrodes has a nanocomposite structure comprising core-shell nanoparticles dispersed in an electrolyte matrix. The other electrode could have a more conventional supercapacitor-type structure, for example, an irreversible conductor and an electrolyte (electrochemical double-layer capacitor type); a surface reactive conductor and an electrolyte (pseudocapacitor type); or a reversible conductor and an electrolyte, such as is typically incorporated into a battery-type hybrid capacitor.

It is a simple exercise to build a multi-layer device of two or more cells according to the method described herein. It is also possible to amend the fabrication methods described herein to produce a spirally wound structure: such methods are practiced and well understood by those skilled in the art.

### Fabrication of an Electrostatic Capacitor-Type Electronic Battery according to the present invention

A similar, analogous method can be used to fabricate an electrostatic capacitor-type electronic battery according to the present invention. First, conductive or semiconducting nanoparticles are made according to the prior art. In a preferred embodiment, these nanoparticles have diameters < 100 nm, with a narrow size distribution, optimally within ± 10% of their nominal size. Ideally, in the case of semiconducting cores, the particles should have a radius less than the exciton Bohr radius, which is typically in the range 5-25 nm.

In a second step, these nanoparticles are processed to form a thin insulating shell around them. In a preferred embodiment, this shell should be formed from a material with a high dielectric-strength.

Third, a suitable ligand is attached to the core-shell nanoparticles so that they can be wetted by the preferred high dielectric-strength matrix in which they will be dispersed in step 4. Steps 2 and 3 can be combined into a single chemical reaction, depending on the functionality that is desired and the availability of suitable ligands.

In a fourth step, the core-shell nanoparticles surrounded by their ligands are dispersed in a high dielectric-strength matrix. In a preferred embodiment, the concentration dispersed in the matrix should be sufficiently dilute so that the average distance between adjacent core-shell nanoparticles is too large for electron tunneling, thereby ensuring that the composite dielectric remains electrically insulating at high applied fields. Preferably, the dielectric matrix should be in a liquid state while the nanoparticles are dispersed therein. In cases where the electrolyte is a polymer electrolyte, the nanoparticles should be dispersed prior to final polymerization.

In a fifth step, the composite dielectric containing the core-shell nanoparticles dispersed in a high dielectric-strength medium is applied to one of the metal electrodes. This can be a metal foil or a substrate support that has been metalized previously.

In a sixth step, another metal electrode is applied to the composite dielectric on the face opposing the first electrode.

Finally, in the seventh step, the device is hermetically sealed in an inert environment to prevent oxygen and/or water from degrading the core-shell nanoparticles or other components of the capacitor over time.

It should be recognized that there are many ways that the principles described herein can be implemented by those skilled in the art and the specific materials and methods mentioned should not be used to limit the scope of this invention.

The present disclosure includes that contained in the appended claims, as well as that of the foregoing description. Although this invention has been described in its preferred form with a certain degree of particularity, it is understood that the present disclosure of the preferred form has been made only by way of example and that numerous changes in the details of construction and the combination and arrangement of parts may be resorted to without departing from the spirit and scope of the invention.

Now that the invention has been described,

## Claims

1. An electrostatic capacitor comprising:
a first electrode;
a second electrode;
a high dielectric-strength insulating matrix separating said first electrode from said second electrode; and
a plurality of first core-shell nanoparticles, each of said first core-shell nanoparticles having a first conductive core and a first insulating shell, said first core-shell nanoparticles dispersed in said high dielectric-strength insulating matrix.

2. The capacitor according to claim 1, wherein said first conductive core further comprises a first metal or a first semiconductor.

3. The capacitor according to claim 2, wherein said first conductive core further comprises a first semiconductor, thus forming at least one first semiconducting core and each of said first semiconducting cores further comprising first nano-scale semiconducting particles, said first nano-scale semiconducting particles having an average radius less than or equal to the appropriate exciton Bohr radius.

4. The capacitor according to any of the claims 1 to 3, wherein said first insulating shell further comprising a high dielectric-strength material.

5. The capacitor according to any of the claims 1 to 4, whereby said first electrode is a first nanocomposite electrode, said first nanocomposite electrode having second conductive core-shell nanoparticles in a first electrolyte matrix, said second conductive core-shell nanoparticles further comprising a second conductive core or a second semiconducting core having a first diameter of less than 100 nm and having ligands attached to them.

6. The capacitor according to any of the claims 1 to 5, whereby said second electrode is a second nanocomposite electrode, said second nanocomposite electrode having third conductive core-shell nanoparticles in a second electrolyte matrix, said third conductive core-shell nanoparticles further comprising a third conductive core or a third semiconducting core having a second diameter of less than 100 nm and having ligands attached to them.

7. The capacitor according to any of the claims 1 to 6, wherein said core-shell nanoparticles further comprising a core of a single element surrounded by a shell comprising a simple binary compound of the same element as the core.

8. A method for fabricating a capacitor comprising:
providing a first metal electrode having a first surface;
providing a second metal electrode having a second surface;
providing nanoparticles having a conductive core or a semiconducting core;
processing said nanoparticles to form a thin shell around the core of said nanoparticles;
attaching ligands to said processed nanoparticles; and
dispersing said processed nanoparticles with said attached ligands into a high dielectric-strength matrix to form a composite dielectric;
applying said composite dielectric to said first surface of said first metal electrode and to said second surface of said second electrode; and
hermetically sealing said first metal electrode, said composite dielectric, and said second electrode.

9. The method according to claim 8, wherein said core of said nanoparticles further comprising a diameter less than or equal to 100 nm.

10. The method according to claim 8 or 9, wherein said semiconducting core of said nanoparticles further comprising a radius that is less than or equal to the exciton Bohr radius.
